# EUROPÄISCHE PATENTSCHRIFT

(11) **EP 0 809 543 B1**
(45) Veröffentlichungstag und Bekanntmachung des Hinweises auf die Patenterteilung: **18.11.1998**
(21) Anmeldenummer: 96904799.2
(22) Anmeldetag: 16.02.1996
(51) Int. Cl.: B07B 15/00, B07B 13/04, B07B 13/08

(54) **VERFAHREN UND VORRICHTUNG ZUM SORTIEREN VON ABFALL, INSBESONDERE BAUMISCHABFALL**
PROCESS AND DEVICE FOR SORTING WASTE MATERIAL, ESPECIALLY MIXED WASTE MATERIAL FROM CONSTRUCTION
PROCEDE ET DISPOSITIF POUR TRIER DES DECHETS, NOTAMMENT DES DECHETS MELANGES PROVENANT DE LA CONSTRUCTION

(30) Priorität: 17.02.1995 DE 19505385
(43) Veröffentlichungstag der Anmeldung: 03.12.1997
(73) Patentinhaber: Rethmann Kreislaufwirtschaft GmbH & Co. KG, 44536 Lünen (DE)
(72) Erfinder: RETHMANN, Joseph, D-48249 Dülmen (DE); LAMMERS, Theo, D-48565 Steinfurt (DE)
(74) Vertreter: Brügge, Jürgen
(86) Internationale Anmeldenummer: EP9600662
(87) Internationale Veröffentlichungsnummer: WO9625246

(56) Entgegenhaltungen:
- EP-A- 0 243 819
- EP-A- 0 628 351
- DE-A- 3 708 180
- DE-C- 3 914 205
- FR-A- 1 059 973
- US-A- 3 680 694

## Beschreibung

Die Erfindung betrifft ein Verfahren zum Sortieren von wenigstens teilweise verwertbarem Abfall wie Baumischabfall o.dgl., bei dem aus einer weiterverwertbaren, schweren Inertfraktion Leichtfraktionen wie Holz, Kunststoffe sowie Schwebstoffe wie Papier usw. aussortiert werden. Die Erfindung betrifft auch entsprechende Vorrichtungen zur Durchführung dieses Verfahrens.

In der heutigen Zeit werden Abfälle wie Baumischabfall, Bauschutt, Altglas usw. nicht mehr einfach wie früher in Deponien abgelagert, sondern weitgehend einer Wiederverwertung zugeführt, und nur die nicht mehr verwertbaren Reste werden auf geeignete Weise entsorgt (Kreislaufwirtschaftsgesetz). Baumischabfall sowohl aus dem Hochbau als auch aus dem Tiefbau enthält z.B. neben einer weiterverwertbaren, schweren Inertfraktion (Mauersteine, Zement, Putzreste, Beton und Sand) darüber hinaus Metallteile, Holz, Kunststoffabfälle sowie Schwebstoffe wie Isolierstoffe, Folien und Papier. Diese Bestandteile müssen sorgfältig sortiert werden, um wenigstens den größten Teil davon einer Wiederverwertung zuzuführen, z.B. als Straßenbaumaterial.

Bisherige Sortieranlagen zum Sortieren von Baumischabfall hatten einen erheblichen Raumbedarf, und die Sortierung erfolgte in den verschiedenen Stufen weitgehend auf manuellem Wege.

Aus der DE-A-37 08 180 ist eine Vorrichtung zum Sortieren insbesondere von Bauschutt bekannt, bei der nach einer Zerkleinerung der Bauschutt durch ein Schwingsieb in vier Fraktionen zerlegt wird. Anschließend erfolgt durch einen quer einfallenden Luftstrom eine Windsichtung der drei größten ausgesiebten Fraktionen. Bei der Verwendung eines Schwingsiebes tritt jedoch das Problem auf, daß feine Stoffe, insbesondere wie sie bei Baumischabfall vorkommen, insbesondere im feuchten Zustand des Abfalls zum Verstopfen solcher Siebe führen, so daß nach kurzer Zeit solche Siebe manuell gereinigt werden müssen. Außerdem erfolgt keine Trennung von Leichtfraktionen wie Holz von der Grobfraktion, sondern durch die Windsichtung werden lediglich leichte Schwebstoffe abgesaugt.

Aus der US-A-3,680,694 sind Verfahren und Einrichtungen zum Trennen von Gegenständen verschiedener Elastizität bekannt. Es geht hier insbesondere um das Sortieren von Obst, z.B. Äpfeln, um z.B. reife Früchte von unreifen zu unterscheiden. Hierbei wird ein Vibrationstrog verwendet, dessen Schwingungsfrequenz den zu sortierenden Gegenständen angepaßt ist.

Aus der EP-A-218 822 ist eine Vorrichtung zum Trennen eines Wertstoffgemisches bekannt, die mit einer Vibrorinne arbeitet. Durch Anbringen zweier zueinander versetzter Unwuchtmotoren erfolgt eine Separation zwischen rundem und flachem Material auf der Basis der unterschiedlichen Reibung zwischen den beiden Materialien.

Schließlich ist der aus der EP-A-628 351 ein Verfahren und eine Vorrichtung zum Trennen von Schüttgut bekannt, die mit einem Schwingsieb arbeiten, auf dem das Schüttgut fluidisiert wird. Mittels Absaugung wird die Leichtfraktion abgesaugt, und es findet ferner eine Unterstützung der Fluidisierung durch eine Belüftung von unten statt. Dieses Verfahren ist jedoch nur geeignet, wenn das zu sortierende Material nicht zum Zusammenbacken neigt, was jedoch bei Baumischabfall meist immer der Fall ist, insbesondere wenn das Material feucht oder sogar im feuchten Zustand gefroren ist.

Der vorliegenden Erfindung liegt die Aufgabe zugrunde, ein Verfahren und eine Vorrichtung zum Sortieren von Abfall, insbesondere Baumischabfall mit feinen Bestandteilen und auch im feuchten Zustand, vorzuschlagen, womit es möglich ist, weitgehend ohne manuelle Hilfskräfte auszukommen und bei der die entsprechende Vorrichtung auf kleinstem Raum untergebracht werden kann, um ggf. eine Sortierung mit einer mobilen Anlage vor Ort durchführen zu können.

Das Verfahren gemäß der vorliegenden Erfindung ist gekennzeichnet durch folgende Verfahrensschritte:
a) Anliefern des Abfalls bestimmter maximaler Korngröße bzw. Zerkleinern des Abfalls auf eine solche Korngröße,
b) Trennen des Abfalls in Kleinfraktion und Grobfraktion in einem Vibrationstrennrohr,
c) Säubern der erhaltenen Kleinfraktion zwecks Erhalt einer schweren, weiterverwertbaren, Inertfraktion unter Anwendung von Zuluft und Abluft zum Ausscheiden von Schwebeteilchen, und
d) Trennung der Grobfraktion durch eine Trennkaskade in Leichtfraktion und weiterverwertbare, schwere Inertfraktion.

Bei dem erfindungsgemäßen Verfahren besteht die Lösung nun nicht nur in der Verwendung von Abfall bestimmter maximaler Korngröße, oder entsprechender vorheriger Zerkleinerung, und anschließender Trennung in einer Trennkaskade in Leichtfraktion und weiterverwertbare, schwere Inertfraktion bei entsprechender Luftunterstützung, sondern wichtig ist vor allem die Erkenntnis, daß eine wirkungsvolle Trennung in der nachgeschalteten Trennkaskade in Leichtfraktion und schwere Inertfraktion nur dann möglich ist, wenn das in die Trennkaskade eingegebene Material vorher von kleinen Fraktionen befreit wurde. Würde in dem der Trennkaskade zugeführten Material ein zu großer Anteil von Kleinfraktionen enthalten sein, so würde das Trennergebnis unbefriedigend ausfallen.

Vorteilhafterweise wird bei dem erfindungsgemäßen Verfahren die Trennung der Grobfraktion in der Trennkaskade in Leichtfraktion und Schwerfraktion noch durch Zuluft und Abluft zum Abtransport der Leichtfraktion unterstützt. Diese Anwendung von Zuluft und Abluft in der Trennkaskade würde jedoch zu Problemen führen, wenn nicht vorher dem zugeführten Material die Feinanteile entzogen worden wären, weil dann auch die schweren, weiterverwertbaren feinen Stoffe mit abgezogen werden würden.

Während das Abtrennen der Kleinfraktion im Abfall mit einem (ersten) Vibrationstrennrohr erfolgt, ist gemäß einer vorteilhaften Ausgestaltung des Verfahrens das Säubern der erhaltenen Kleinfraktion auf besonders effektive Weise möglich, wenn die aus dem ersten Vibrationstrennrohr erhaltene Kleinfraktion einem zweiten Vibrationstrennrohr zugeführt wird, in dem eine weitere Trennung in Feinkorn und Grobkorn erfolgt, daß dann das Feinkorn einer Weiterverwertung zugeführt wird, während das Grobkorn durch Luftbedüsung und Luftabsaugung im Bereich des Ausgangsabschnittes des zweiten Vibrationstrennrohres von Schwebeteilchen gesäubert und anschließend als gereinigte Schwerfraktion der Weiterverwertung zugeführt wird. Dieses zweite Vibrationstrennrohr hat insbesondere die Aufgabe, das Feinkorn vorher abzuzweigen, damit das Grobkorn anschließend durch Luftbedüsung und Luftabsaugung wirkungsvoll gereinigt werden kann, ohne daß hierbei das schwere Feinkorn mitgezogen wird.

Während das erfindungsgemäße Verfahren zweckmäßigerweise mit einer Korngröße des Abfalls von kleiner als 60-80 mm, vorzugsweise 45 mm, arbeitet, sollten zum wirkungsvollen Arbeiten der Trennkaskade vorher Kleinfraktion mit einer Korngröße von etwa 0-10 mm abgetrennt werden. Die weitere Aufteilung der Kleinfraktionen im zweiten Vibrationstrennrohr arbeitet zweckmäßigerweise mit einem Feinkorn mit einer Korngröße von 0-3 mm und einem Grobkorn mit einer Korngröße von 3-10 mm. Weitere vorteilhafte Ausgestaltungen des erfindungsgemäßen Verfahrens sind den Unteransprüchen zu entnehmen.

Aus der DE-C-39 14 205 ist eine Anlage zum Aufbereiten von Bauschutt bekannt, der anorganische und organische Bestandteile aufweist. Dem gebrochenen Bauschutt wird eine Zusatzmenge eines feinkörnigen Separationsmittels beigemischt, und die Mischung wird einer Schwingrinne aufgegeben. Die Zusatzmenge wird so eingestellt, daß in der arbeitenden Schwingrinne die organischen Bestandteile aufschwimmen. Aus der Schwingrinne werden die organischen Bestandteile abgezogen und der verbleibende, von organischen Bestandteilen befreite Bauschutt wird der Wiederverwendung zugeführt.

Obwohl also Schwingrinnen zur Trennung an sich bekannt sind, wird zur Durchführung des erfindungsgemäßen Verfahrens zweckmäßigerweise eine Trennkaskade verwendet, die gekennzeichnet ist durch mehrere abgerundete, trogartig geformte oben offene Behälter, deren einer Rand höher als deren anderer Rand ist und die übereinander, in der waagerechten Ebene quer zur Troglängsachse versetzt, angeordnet sind, wobei der höhere Rand des höher angeordneten Behälters etwa über der Mitte des darunterliegenden Behälters angeordnet ist, und die miteinander zu einer Einheit verbunden, federnd aufgehängt und durch mindestens einen rotierenden Unwuchtmotor angetrieben sind, so daß die schwere Inertfraktion über den höheren Rand fällt und die jeweilige Leichtfraktion über den anderen Rand ausgeschieden wird.

Eine besonders vorteilhafte Ausführungsform ist derart aufgebaut, daß die trogförmigen Behälter zwischen zwei senkrecht stehenden Seitenwänden angeordnet sind, die durch waagerechte, stabile Verbindungstraversen zu einem steifen Ganzen miteinander verbunden sind, und daß das Ganze über Federn schwingend auf einem Gestell aufgehängt ist. Vorteilhafterweise sind über im wesentlichen die gesamte Trogbreite der Trennkaskade eine etwa waagerecht den jeweils höheren Rand anblasende Zuluftdüse sowie eine sich ebenfalls im wesentlichen über die gesamte Trogbreite erstreckende, etwa waagerecht vom jeweiligen niedrigeren Rand absaugende Abluftdüse zum Abtransport der Schwebstoffe vorgesehen. Weitere vorteilhafte Ausgestaltungen der Trennkaskade zur Durchführung des Verfahrens sind ebenfalls den Unteransprüchen zu entnehmen.

Schließlich betrifft die Erfindung auch eine vorteilhafte Vorrichtung zur Durchführung des Verfahrens in besonderer Ausbildung eines Vibrationstrennrohrs. Das Vibrationstrennrohr weist einen etwa zylindrischen Querschnitt sowie eine Eingangsöffnung und eine Ausgangsöffnung auf, der die Grobfraktion entnehmbar ist. Das Vibrationstrennrohr wird durch einen Vibrationsmotor gegenüber der Waagerechten um einen spitzen Winkel aufwärtsgerichtet in Querrichtung in Schwingungen versetzt, und im Bereich kurz vor der Ausgangsöffnung gegenüber dem untersten Punkt des Bodens des Vibrationstrennrohrs ist zu derjenigen Seite eine Entnahmeöffnung für die Kleinfraktion versetzt angeordnet, die gegenüber dem Boden in Aufwärtsrichtung der Schwingung liegt. Zusätzlich zu dem (ersten) Vibrationstrennrohr ist vorteilhafterweise ein zweites Vibrationstrennrohr etwa gleichen Aufbaus vorgesehen, dem die abgetrennte Kleinfraktion des ersten Vibrationstrennrohrs zugeführt wird, und dieses in Feinkorn und Grobkorn trennt. Im Bereich der Ausgangsöffnung des zweiten Vibrationstrennrohrs wird dabei Zuluft eingeführt und Abluft zum Abtransport der im Grobkorn enthaltenen Schwebeteilchen abgesaugt. Weitere vorteilhafte Ausgestaltungen der Vorrichtung mit den Vibrationstrennrohren sind den Unteransprüchen zu entnehmen.

Schließlich ist die Gesamtvorrichtung in vorteilhafter Weise derart ausgebildet, daß im wesentlichen alle Einrichtungen in einem oder mehreren transportfähigen Containern untergebracht sind. Für den Fall, daß die Wiederaufbereitung der Abluft mit einem Schwerkraftabscheider erfolgt, der vorzugsweise ein oder mehrere Zyklonabscheider aufweist, so ist die Gesamtvorrichtung zweckmäßigerweise auf zwei Container verteilt, wobei in einem der Container der Schwerkraftabscheider sowie ggf. dazugehörige Zusatzeinrichtungen wie Gebläse zum Erzeugen der Zuluft und in dem anderen Container die übrigen Einrichtungen, jedoch ohne Einrichtung zum Zerkleinern des Baumischabfalls, untergebracht sind.

Weitere vorteilhafte Ausgestaltungen der Erfindung sind den Unteransprüchen zu entnehmen.

Die Erfindung wird nachfolgend unter Bezug auf die beigefügten Zeichnungen anhand von Ausführungsbeispielen näher erläutert:

Es zeigen:
- Fig. 1: eine schematische Darstellung in Form eines Fließbildes der erfindungsgemäßen Vorrichtung, als Beispiel zum Sortieren von Baumischabfall ausgestattet;
- Fig. 2: eine Darstellung einer als Trennkaskade ausgebildeten Trennvorrichtung zum Trennen des anfallenden Baumischabfalls in eine schwere, wiederverwertbare Inertfraktion und eine auszuscheidende Leichtfraktion;
- Fig. 3: eine schematische Darstellung eines Teils der Trennvorrichtung nach Figur 2 sowie zwei Zusatzdarstellungen 3a und 3b;
- Fig. 4: eine Draufsicht auf eine in zwei Containern angeordnete Vorrichtung in schematischer Darstellung, mit einer anderen Ausbildung zur Abtrennung der Kleinfraktionen;
- Fig. 5: eine schematische Darstellung der auf ein Vibrationstrennrohr der Vorrichtung nach Figur 4 einwirkenden Schwingungskräfte;
- Fig. 5a, 5b u. 5c: schematische Schnittdarstellungen entsprechend der Schnitte A, B und C der Fig. 4; und
- Fig. 6a, 6b u. 6c: schematisierte Schnittdarstellungen der Schnitte A, B und C des zweiten Trennrohrs nach Fig. 4.

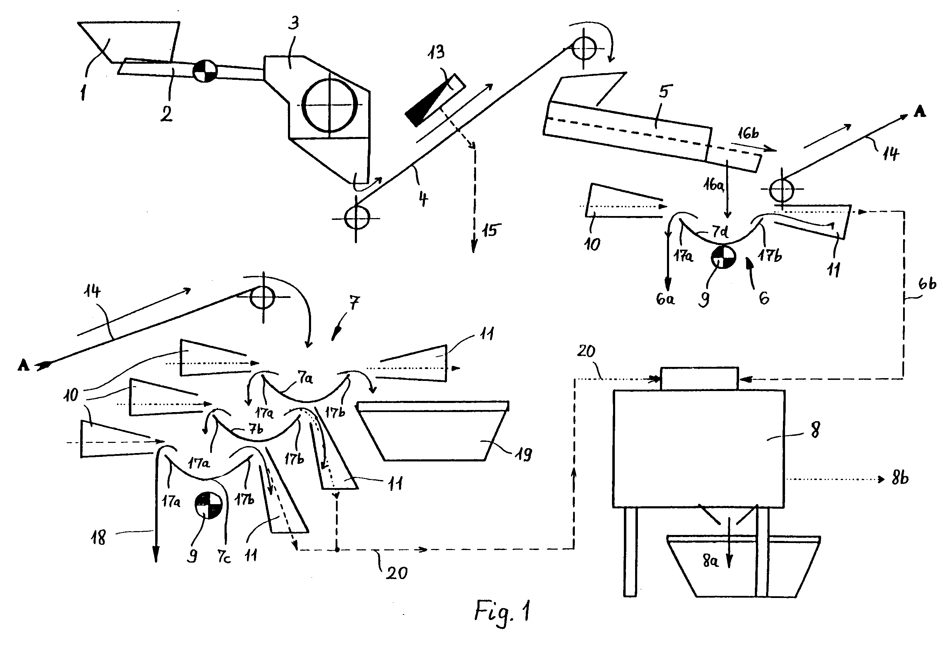

Die in Figur 1 dargestellte Vorrichtung zum Sortieren von Baumischabfall o.dgl. wird nachfolgend beschrieben, wobei hieraus insbesondere auch die entsprechenden Verfahrensschritte und -merkmale hervorgehen.

Der zu sortierende Baumischabfall wird in einen Aufgabetrichter 1 eingefüllt und gelangt über einen Vibrationsförderer 2 in einen Prallbrecher 3, um den Baumischabfall in eine verarbeitbare Korngröße von ca. maximal 60-80 mm, vorzugsweise 45 mm, vorzubereiten. Hierzu weist der Prallbrecher 3 eine Spaltbreite von 60-80 mm, vorzugsweise von 45 mm, auf. Diese angegebenen Maße gelten für Holzteile wegen ihrer Faserstruktur jedoch nur für das Dickenmaß, in der Länge werden in einem Prallbrecher mit Spaltdurchlaß in der Länge auch größere Stücke durchgelassen, z.B. bis 300 mm Länge. Es ist natürlich auch möglich, diese Vorbereitung des Baumischabfalls außerhalb der Anlage durchzuführen.

Der auf eine Korngröße von kleiner als 60-80 mm bzw. 45 mm begrenzte Baumischabfall gelangt nun auf ein Förderband 4, an dem ein Magnetabscheider 13 angeordnet ist. Mit diesem Magnetabscheider werden Eisen- und Stahlteile ausgesondert und abgezweigt (Pfeil 15). Das von Eisenteilen befreite Material gelangt von dem Förderband 4 in ein Vibrationstrennrohr 5, mit dem eine Trennung in Kleinfraktion 16a unter etwa 10 mm und Grobfraktion 16b über etwa 10 mm Korngröße erfolgt. Die Kleinfraktion 16a gelangt in eine weitere Trennvorrichtung 6, die durch einen Unwuchtmotor 9 angetrieben ist. Hier erfolgt eine Trennung in Schwerfraktion 6a und Leichtfraktion 6b. Der Trennvorgang wird durch Zuluft und Abluft unterstützt, wobei über eine Zuluftdüse 10 die Zuluft zugeführt und über eine Abluftdüse 11 die Abluft einschließlich der Leichtfraktion 6b abgesaugt wird. Die Schwerfraktion 6a ist soweit von anderen Materialien befreit, daß sie als Baumaterial weiterverwendet werden kann. Die Leichtfraktion 6b in der Abluft wird einem Schwerkraftabscheider 8 zugeführt, der später noch näher erläutert wird.

Die in dem Trennrohr 5 gewonnene Grobfraktion 16b gelangt über ein Förderband 14 in eine weitere Trennvorrichtung 7. In der Darstellung nach Figur 1 findet das rechts oben dargestellte Förderband 14 über die miteinander verbundenen Punkte A seine Fortsetzung im linken mittleren Bereich.

Die Trennvorrichtung 7 ist als Trennkaskade ausgebildet und enthält im beschriebenen Beispiel drei kaskadenartig übereinander angeordnete, trogförmige Behälter 7a, 7b und 7c, die in einem gemeinsamen Gestell von einem Unwuchtmotor 9 angetrieben wird. Jeder dieser trogförmigen Behälter 7a, 7b und 7c weist einen ersten, höheren Rand 17a und einen zweiten, niedriger angeordneten Rand 17b auf. Der höhere Rand 17a des oberen Behälters liegt etwa über dem mittleren Bereich des darunterliegenden Behälters 7b, und der höhere Rand 17a des Behälters 7b liegt etwa über dem mittleren Bereich des darunterliegenden Behälters 7c. Alle drei Behälter enthalten im Bereich des höheren Randes 17a eine über die gesamte Breite reichende Zuluftdüse 10 und im Bereich des niedrigeren Randes 17b eine ebenfalls über die gesamte Breite reichende Abluftdüse 11.

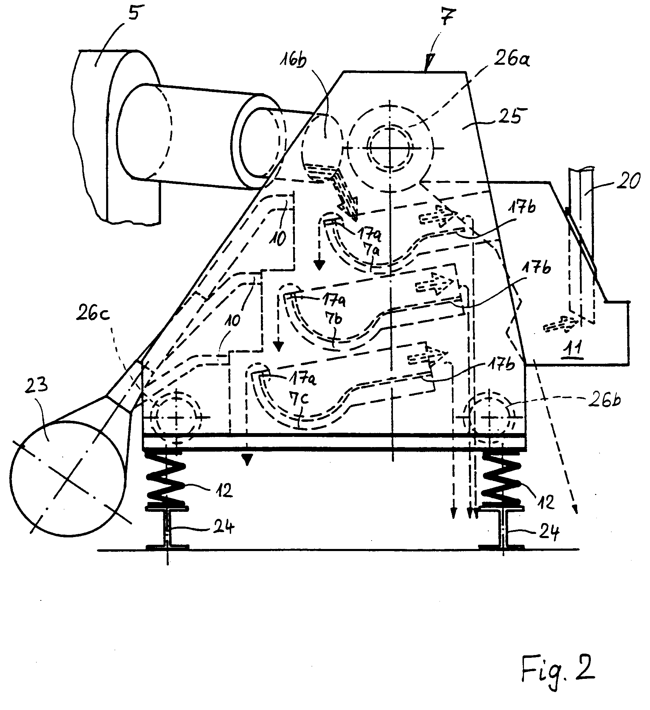

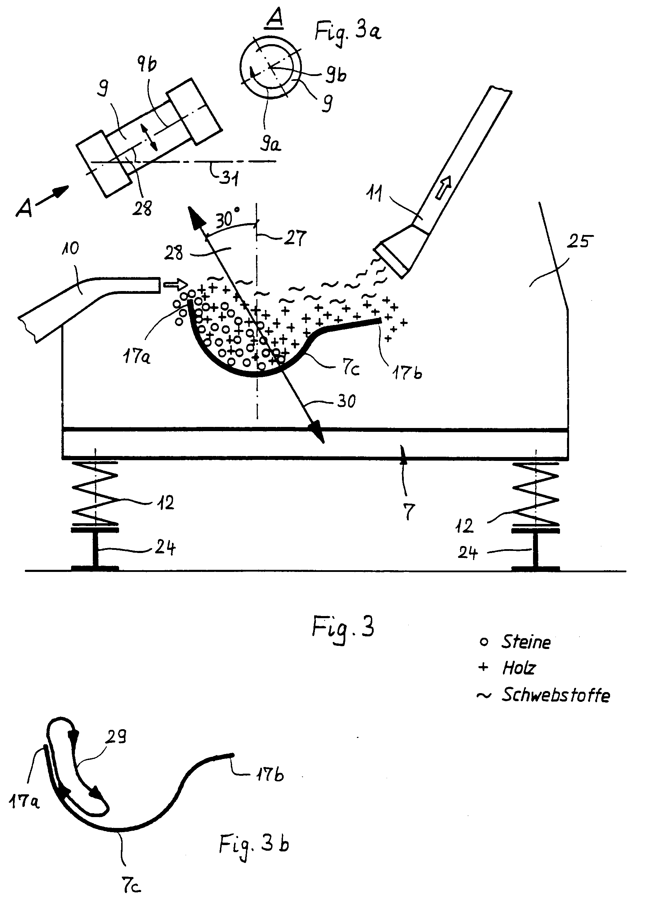

Wie die Figuren 2 und 3 zeigen, ist die gesamte Anordnung mit den drei trogförmigen Behältern 7a, 7b und 7c, das von dem bereits erwähnten Unwuchtmotor 9 angetrieben wird, über Federn 12 auf einem Untergestell 24 gelagert. Die in den oberen Behälter 7a fallende Grobfraktion 16b, die über das Förderband 14 antransportiert wird (siehe Figur 1), wird durch die Vibrationen in eine schwere und eine leichte Fraktion getrennt, wobei die Leichtfraktion 19 über den niedrigeren Rand 17b ausgeschieden wird. Es handelt sich hier um gröbere Teile wie Holzstücke usw. Die schwerere Fraktion fällt in den darunterliegenden trogförmigen Behälter 7b. Auch hier erfolgt wieder eine Trennung in Schwerfraktion und Leichtfraktion, wobei die Schwerfraktion in den darunterliegenden Behälter 7c fällt. Das gleiche setzt sich fort auch für den Behälter 7c. Die Leichtfraktionen aus den Behältern 7b und 7c werden dabei, da sie eine kleinere Körnung haben, zusammen mit der Abluft über die Düsen 11 abgesaugt und gelangen über eine Verbindung 20 in den bereits erwähnten Schwerkraftabscheider 8. Die Schwerfraktion 18 aus dem unteren Behälter 7c ist nun von allen Leichtstoffen befreit und kann als Baumaterial weiterverwendet werden, ggf. nach einem weiteren Zerkleinerungsvorgang.

Der in Figur 1 dargestellte Schwerkraftabscheider 8 dient dazu, die aus der Trennvorrichtung 6 kommende Abluft der Abluftdüse 11 einschließlich der dort anfallenden Leichtfraktion 6b sowie die über die Leitung 20 von der Trennkaskade 7 kommende Abluft der Abluftdüsen 11 einschließlich der dort anfallenden Leichtfraktion (kleinere Teile) in wiederverwendbare Reinluft 8b und abgeschiedene Leichtfraktion 8a zu trennen. Die Reinluft 8b wird über ein entsprechendes Gebläse (in Figur 1 nicht gezeigt) wieder den Zuluftdüsen 10 zugeführt.

In Figur 2 ist nun der Aufbau der Trennkaskade 7 in Seitenansicht dargestellt. Es sind die bereits in Figur 1 schematisch dargestellten trogförmigen Behälter 7a, 7b und 7c gezeigt, die in einer Anordnung aus zwei Seitenwänden 25 und diese fest miteinander verbindenden Verbindungstraversen 26a, 26b, 26c aufgehängt sind. Die gesamte Anordnung ist mittels Federn 12 auf einem Gestell 24 gelagert und führt - angetrieben durch einen oder zwei Unwuchtmotoren 9 - eine Schwingung durch, wie anhand der Figur 3 noch im einzelnen erläutert wird. Der zu trennende, vorbehandelte Baumischabfall gelangt als Grobfraktion 16b in den oberen trogförmigen Behälter 7a. Die jeweils schwerere Fraktion fällt über den höheren Rand 17a in den darunterliegenden Behälter 7b bzw. 7c, während die Leichtfraktion über den jeweils niedrigeren Rand 17b (in der Zeichnung der Figur 2) nach rechts ausgeschieden wird. Außerdem ist zu sehen, wie über Zuluftdüsen 10 Zuluft von einem Gebläse 23 oberhalb der höheren Ränder 17a eingeblasen und oberhalb der niedrigeren Ränder 17b abgesaugt wird. Die Abluft einschließlich ausgeschiedener Leichtfraktion gelangt dann über die Leitung 20 zum Schwerkraftabscheider 8 (siehe Figur 1).

Die Anzahl der kaskadenartig übereinander angeordneten trogförmigen Behälter 7a, 7b und 7c der Trennvorrichtung 7 kann je nach Zusammensetzung des Abfalls variieren. Für Baumischabfälle haben sich drei übereinander angeordnete Behälter 7a, 7b, 7c a bewährt. Bei anderen zu sortierenden Abfällen kann es möglich sein, daß bereits zwei trogartige Behälter ausreichen; dies hängt vor allem von der Konsistenz der Abfälle ab.

In dem Fließbild nach Figur 1 wurde die genaue Lage und Ausrichtung der Unwuchtmotoren 9 in den Trennvorrichtungen 6 bzw. 7 nicht dargestellt, um die Übersicht nicht zu gefährden. Auch in die Seitenansicht der Trennvorrichtung 7 nach Figur 2 ist kein Unwuchtmotor eingezeichnet, sondern dieser sitzt auf den Außenflächen beider Seitenwände 25, die durch die querverlaufenden Verbindungstraversen 26a, 26b und 26c miteinander verbunden sind. Es sind bei dieser Ausführungsform vorzugsweise zwei Unwuchtmotoren vorgesehen, die etwa im dynamischen Schwerpunkt der Gesamtanordnung der Trennvorrichtung 7 angeordnet sind, also etwa im Bereich zwischen den gestrichelt eingezeichneten trogförmigen Behältern 7a und 7b.

Anhand der Figur 3 soll nun die Wirkungsweise einer solchen Trennvorrichtung 6 oder 7 näher erläutert werden, wobei der in Figur 3 dargestellte trogförmige Behälter 7c entweder einen einzigen Behälter, z.B. für die Trennvorrichtung 6, oder aber einen der kaskadenartig übereinander angeordneten Behälter 7a, 7b oder 7c der Trennkaskade 7 zeigt.

Für den im oberen Bereich dargestellten Unwuchtmotor 9 ist nicht die genaue Lage dargestellt, sondern nur seine bevorzugte Ausrichtung. Die Längsachse bzw. Rotationsachse 9b des Unwuchtmotors 9 verläuft quer zur Längsachse des trogförmigen Behälters 7c, also etwa rechtwinklig hierzu. Die Längsachse 9b ist jedoch gegenüber der Waagerechten 31 der Trennvorrichtung, gegenüber der auch die Höhe der Ränder 17a und 17b des Behälters 7c definiert ist, um einen spitzen Winkel 28 geneigt, der im vorliegenden Beispiel ca. 30° beträgt. Dieser Winkel hat sich als optimal herausgestellt, die Vorrichtung arbeitet jedoch in einem Bereich des Winkels 28 von 20°-40° zufriedenstellend.

Der Unwuchtmotor 9 erzeugt eine Schwingung bzw. Rüttelbewegung in Richtung des Doppelpfeils 30, die die Wirkungslinie des Unwuchtmotors 9 darstellt. Diese Wirkungslinie 30 verläuft senkrecht zur Rotations- bzw. Längsachse 9b des Unwuchtmotors 9. Wie in Figur 3 schematisch angedeutet, bewirkt die Schwingung in Richtung der Wirkungslinie 30 eine Fluidisierung des im Behälter 7c enthaltenen Materials, und durch die trogförmige, abgerundete Form des Behälters 7c ergibt sich eine Förderbewegung entsprechend der geschlossenen Linie 29 nach Figur 3b und damit eine stetige Umwälzung des Materials, das in Figur 3 als Steine, Holz und Schwebstoffe angedeutet ist. Bei nicht ausreichender Füllmenge im Behälter 7c fällt das umgewälzte Material auf der der höheren Kante 17a gegenüberliegenden Seite in den Behälter 7c zurück. Beim Zufließen von neuem Material von oben jedoch läuft es an der oberen Kante 17a des Behälters 7c über und fällt als schwere Inertfraktion nach unten. Die Leichtstoffe (Holz und Schwebstoffe) werden zur Mitte des trogförmigen Behälters 7c transportiert und bei genügendem Volumen im Behälter 7c auf der niedrigeren Seite 17b ausgetragen und fallen nach unten. Die besonders leichten Schwebstoffe werden durch Zuluft (Düse 10) und Abluft (Aufnahmerohr 11) getrennt abgefördert. Sie gelangen anschließend zum Schwerkraftabscheider.

Es wurde bereits früher erwähnt, daß in der Trennvorrichtung 7 (siehe Figur 2) auf den Außenflächen beider Seitenwände 25 je ein Unwuchtmotor angeordnet ist. Dies ist zweckmäßig, um eine ausreichende Schwingungsleistung zu erzeugen, und darüber hinaus wird die Schwingungsenergie gleichmäßiger verteilt. Es handelt sich in einem solchen Fall um zwei gleiche Unwuchtmotoren 9, die im gleichen Winkel 28 (siehe Figur 3) angeordnet sind, wobei jedoch die Drehrichtungen 9a (siehe Figur 3a) der beiden Unwuchtmotoren 9, aus der gleichen Blickrichtung A gesehen, gegensinnig zueinander verlaufen. Das heißt also, daß der in Figur 3 dargestellte Unwuchtmotor 9 auf der Außenfläche der Seitenwand 25 aus der Blickrichtung A im Uhrzeigersinn verläuft, während der nicht dargestellte Unwuchtmotor auf der Außenfläche der anderen Seitenwand 25, in Blickrichtung A gesehen, entgegen dem Uhrzeigersinn rotiert.

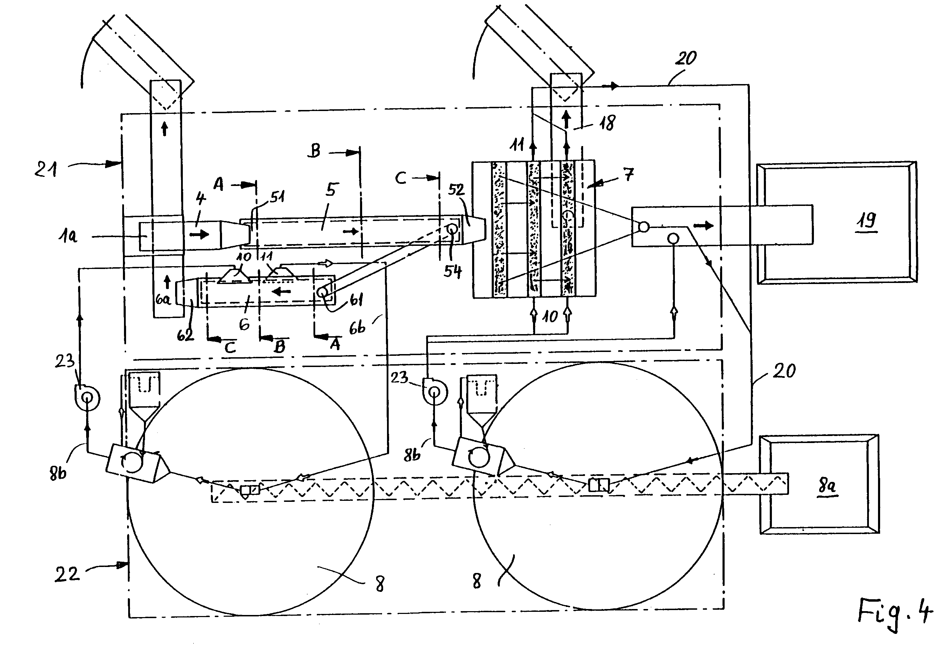

Nachfolgend soll nun ein konkretes Ausführungsbeispiel der erfindungsgemäßen Vorrichtung anhand der Figur 4 beschrieben werden, wobei gleichzeitig eine andere Ausführungsform zur Vorabtrennung der Feinfraktion angegeben wird. Die in Figur 1 schematisch dargestellte Vorrichtung zum Sortieren von Baumischabfall ist in zwei strichpunktiert dargestellten Containern 21 und 22 angeordnet. Die Darstellung erfolgt hierbei ebenfalls schematisch. Das in Figur 4 dargestellte Ausführungsbei spiel enthält hierbei keinen Prallbrecher 3, sondern der angelieferte Baumischabfall wird außerhalb des Containers auf eine Korngröße kleiner als 60-80 mm bzw. 45 mm zerkleinert. Während der erste Container 21 praktisch alle Einheiten der Vorrichtung enthält, ist der Schwerkraftabscheider 8 in Form von zwei Zyklonen in dem zweiten Container 22 untergebracht. Ebenfalls im zweiten Container 22 sind zwei Gebläse 23 angeordnet. Durch diese Aufteilung ist es möglich, die zwischen den beiden Containern 21 und 22 herzustellenden Verbindungen gering und auf einfache Weise herstellbar zu halten.

In Figur 4 ist zu sehen, daß der bereits vorbereitete Baumischabfall mit einer Korngröße kleiner als 60-80 mm bzw. 45 mm an der Stelle 1 a eingebracht wird, über einen Vibrationsförderer 4 einem ersten Vibrationstrennrohr 5 zugeführt wird. Hier erfolgt eine Trennung in Kleinfraktion und Grobfraktion. Die Grobfraktion gelangt zur Trennkaskade 7, die aus drei in Kaskade angeordneten trogförmigen Behältern besteht, die in einem Gestell von mindestens einem Unwuchtmotor in Vibration gesetzt werden. Die hierbei ausgeschiedene schwere Inertfraktion 18 gelangt nach außen und wird durch ein schematisch dargestelltes Förderband forttransportiert. Die in dem ersten Vibrationstrennrohr ausgeschiedene Kleinfraktion gelangt zu einem zweiten Vibrationstrennrohr 6. Die Schwerfraktion 6a wird nach außen an ein schematisch dargestelltes Förderband gefördert.

Die in der Trennkaskade 7 ausgeschiedene Leichtfraktion gelangt über ein schematisch dargestelltes Förderband an einen Behälter 19 für Leichtstoffe grober Art. Die in dem Schwerkraftabscheider 8 abgeschiedenen Abscheidestoffe 8a werden durch eine schematisch dargestellte Förderschnecke nach außen in einen Behälter 8a gefördert.

Nachfolgend soll nun eine zweite Ausführungsform der Vorrichtung zur Vorabtrennung der Feinfraktion durch das erste Vibrationstrennrohr 5 und das nachgeschaltete zweite Vibrationstrennrohr 6 anhand der Fig. 4, 5, 5a-5c und 6a-6c erfolgen.

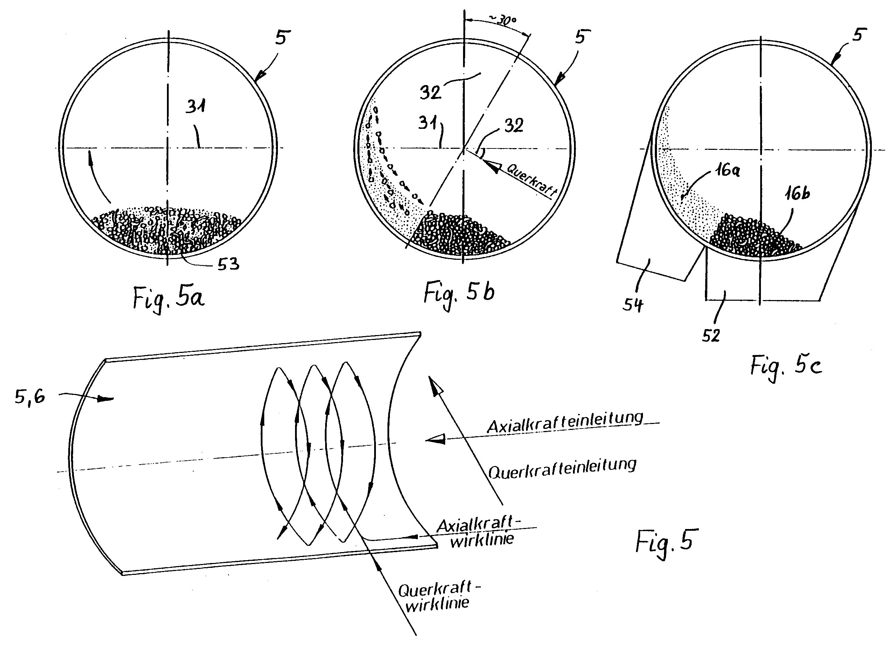

Die Funktionen der beiden Vibrationstrennrohre 5 und 6 sind etwa ähnlich, so daß die schematische Darstellung nach Fig. 5 für beide Vibrationstrennrohre, also auch für die Schnittdarstellungen 6a-6c zutrifft. Die Schwingungen und Rüttelbewegungen der Unwuchtmotoren in der entsprechenden Richtung (siehe Axialkrafteinleitung und Querkrafteinleitung nach Fig. 5) führen zu einer Axialkraftwirklinie und eine Querkraftwirklinie, d.h. zu einer Förderbewegung in Axialrichtung und zu einer Querströmung im Vibrationstrennrohr. Die Querströmung soll nachfolgend anhand der Fig. 5a-5c erläutert werden. Es handelt sich hierbei um die drei Schnitte A, B und C zum Vibrationstrennrohr 5 in Fig. 4.

Am Eingangsbereich bzw. an der Eingangsöffnung 51 (Fig. 4) des Vibrationstrennrohrs 5 (siehe Fig. 5a) liegt der noch unsortierte Baumischabfall mit einer maximalen Korngröße von 60 - 80 mm, vorzugsweise 45 mm, vor. Die Querströmung ist durch einen Pfeil in Fig. 5a angedeutet. Durch diese Querströmung erfolgt eine ständige Umwälzung des Materials (siehe mittleren Bereich entsprechend Fig. 5b), und es werden zum einen Leichtstoffe ausgespült, und zum anderen erfolgt innerhalb der schweren Inertfraktion eine Aufspaltung in Kleinfraktion und Grobfraktion. Wird die Querkraft in einem Winkel 32 von z.B. 30° gegenüber der Waagerechten 31 eingeleitet, so verläuft eine gedachte Trennlinie zwischen Kleinfraktion und Grobfraktion (siehe Fig. 5b) etwa im rechten Winkel zur Querkraft.

Aus Fig. 5b ist zu sehen, daß der anteilsmäßig überwiegende Feinanteil innerhalb der Inertfraktion weit über die Lage, die er allein durch die Querbeschleunigungskraft einnehmen könnte, am Rohr 5 hochgedrückt wird. Durch die Fluidisierung der Kleinfraktion finden dagegen die Grobanteile der Inertfraktion keinen Halt innerhalb dieser Hauptfraktion und fließen wieder in die Rohrmitte (oberhalb des Bodens 53) zurück. Diese vielschichtige Trennwirkung im Vibrationstrennrohr 5 ist bedingt neben der reinen Trägheit der Teilchen auch durch die unterschiedlichen Reibungskoeffizienten bei der Haftung und Bewegung. Insbesondere ist der Halt der einzelnen Körner mit gleicher oder ähnlicher Korngröße untereinander wesentlich höher als bei sehr verschiedenartiger Korngröße, dies kommt insbesondere von der höheren Oberfläche, die sich berührt. Dies führt dazu, daß immer die Fraktion, die anteilsmäßig am meisten vertreten ist, an der Wand hochgedrückt wird.

Aus den Figuren 5a-5c ist zu sehen, daß am Anfang des Vibrationstrennrohrs 5 noch keine Trennung erfolgt ist, während im mittleren Bereich (Fig. 5b) bereits eine weitgehende Trennung erfolgt ist. Die Trennung ist dann im Endbereich, also an der Ausgangsöffnung (siehe Fig. 5c) weitgehend abgeschlossen. Während die im Bereich des untersten Punktes des Bodens 53 liegende Ausgangsöffnung 52 die Grobfraktion 16b abführt, wird über eine seitliche Entnahmeöffnung 54 die Kleinfraktion 16a (0-10 mm) abgeführt.

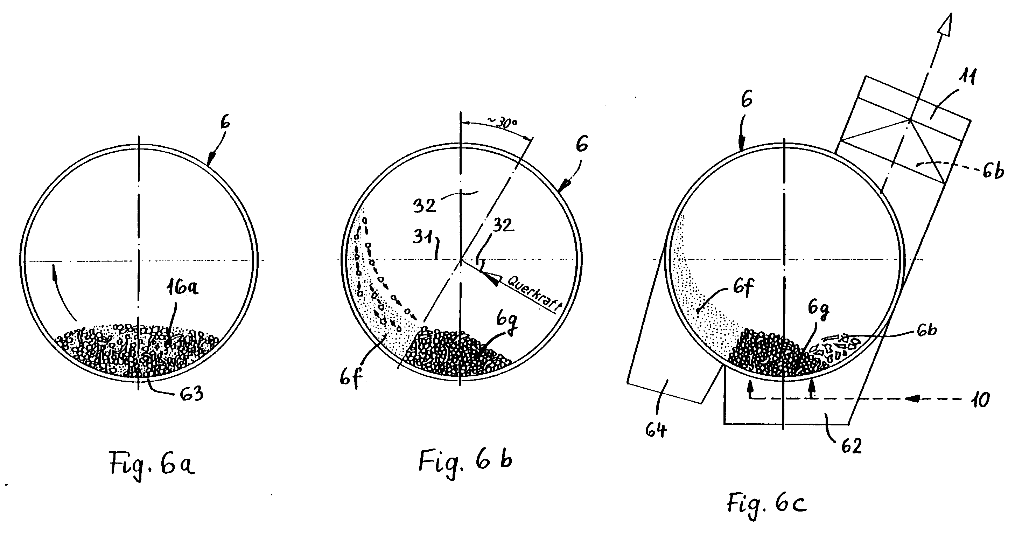

Die Funktion des zweiten Vibrationstrennrohrs 6 (siehe Fig. ist ähnlich wie die des Vibrationstrennrohrs 5. Am Anfangsbereich (siehe Fig. 6a), also an der Eingangsöffnung 61 des Vibrationstrennrohrs 6, liegt die Kleinfraktion 16a (0-10 mm) vor, die von der seitlichen Entnahmeöffnung 54 des ersten Vibrationstrennrohrs 5 geliefert wird. Auch wenn das im Bereich der Fig. 6a liegende Material feiner ist als das Material im Bereich 5a, so wurde es doch aus zeichnerischen Gründen gleich gezeichnet, obwohl es unterschiedlich ist. Das gleiche gilt für die Fig. 6b und 6c.

Durch die in das Vibrationstrennrohr 6 eingeleitete Querkraft, ebenfalls im Winkel 32 von ca. 30° gegenüber der Waagerechten 31 (siehe Fig. 6b), führt wiederum zu einer Trennung in Feinkorn 6f und Grobkorn 6g nach dem gleichen physikalischen Prinzip wie beim Vibrationstrennrohr 5. Das Feinkorn 6f enthält z.B. eine Korngröße von 0-3 mm, während das Grobkorn 6g eine Korngröße von ca. 3-10 mm hat. Oberhalb des Grobkorns 6g liegt auch die aufschwimmende Leichtfraktion 6b (Schwebstoffe). Diese Aufteilung ist jedoch durch Verändern verschiedener Parameter variierbar. Während das Feinkorn 6f das Vibrationstrennrohr 6 wiederum durch eine seitlich angeordnete Entnahmeöffnung 64 verläßt, gelangt das Grobkorn 6g durch die Ausgangsöffnung 62 (ähnlich der Ausgangsöffnung 52 beim Vibrationstrennrohr 5) nach außen.

Aus dem Bereich des Grobkorns 6g werden die Schwebstoffe 6b durch Zuluft 10 (gestrichelt angedeutet) und Abluft 11 abtransportiert, d.h., das die Ausgangsöffnung 62 passierende Grobkorn wird vorher von Schwebstoffen gereinigt.

Die Luftunterstützung zum Abfördern von Leicht- und Schwebstoffen 6b am Ausgang des zweiten Vibrationstrennrohres 6 erfolgt zweckmäßigerweise nur im Bereich der etwa in der Mitte des Bodens 63 liegenden Teilchen des Grobkorns 6g, aber nicht im Bereich des Feinkorns 6f, da sonst die feinen Teilchen des Feinkorns 6 ebenfalls teilweise mitgerissen werden würden. Bei diesem Feinkorn 6f handelt es sich jedoch um Teilchen der schweren Inertfraktion, mit der die Abluft 11 nicht belastet werden soll, sondern diese Fraktion soll wiederverwertet werden.

Um die Separation von feinen Sandanteilen im Vibrationstrennrohr 6 zu unterstützen, kann im Bodenbereich des zweiten Vibrationstrennrohrs 6 ein elastische Sieb vorgesehen sein, das etwa in der Mitte des Rohres angebracht ist.

## Patentansprüche

1. Verfahren zum Sortieren von wenigstens teilweise verwertbarem Abfall wie Baumischabfall o.dgl., bei dem aus einer weiterverwertbaren, schweren Inertfraktion Leichtfraktionen wie Holz, Kunststoffe sowie Schwebstoffe wie Papier usw. aussortiert werden, mit folgenden Verfahrensschritten:
a) Anliefern des Abfalls bestimmter maximaler Korngröße bzw. Zerkleinern des Abfalls auf eine solche Korngröße,
b) Trennen des Abfalls in Kleinfraktion (16a) und Grobfraktion (16b) in einem Vibrationstrennrohr (5),
c) Säubern der erhaltenen Kleinfraktion (16a) zwecks Erhalt einer schweren, weiterverwertbaren, Inertfraktion (6a) unter Anwendung von Zuluft (10) und Abluft (11) zum Ausscheiden von Schwebeteilchen (6b), und
d) Trennung der Grobfraktion (16b) durch eine Trennkaskade (7) in Leichtfraktion und weiterverwertbare, schwere Inertfraktion (18).

2. Verfahren nach Anspruch 1,
dadurch gekennzeichnet, daß die Trennung der Grobfraktion (16b) in der Trennkaskade (7) in Leichtfraktion und Schwerfraktion (18) durch Zuluft (10) und Abluft (11) unterstützt wird.

3. Verfahren nach Anspruch 1 oder 2,
dadurch gekennzeichnet, daß die aus dem ersten Vibrationstrennrohr (5) erhaltene Kleinfraktion (16a) einem zweiten Vibrationstrennrohr (6) zugeführt wird, in dem eine weitere Trennung in Feinkorn (6f) und Grobkorn (6g) erfolgt, daß das Feinkorn (6f) einer Weiterverwertung zugeführt wird, während das Grobkorn (6g) durch Luftbedüsung (10) und Luftabsaugung (11) im Bereich des Ausgangsabschnittes (62) des zweiten Vibrationstrennrohres (6) von Schwebeteilchen (6b) gesäubert und anschließend als gereinigte Schwerfraktion (6a) der Weiterverwertung zugeführt wird.

4. Verfahren nach einem der Ansprüche 1-3,
dadurch gekennzeichnet, daß die Abluft (11) aus der Trennkaskade (7) und/oder die beim Säubern des erhaltenen Grobkorns (6g) abgezogene Abluft (11) durch einen Schwerkraftabscheider (8) wiederaufbereitet und als Zuluft (10) wiederverwendet wird.

5. Verfahren nach einem der vorstehenden Ansprüche,
dadurch gekennzeichnet, daß der zerkleinerte Abfall vor Ausführung des Schrittes b) über einen Magnetabscheider (13) geführt wird.

6. Verfahren nach einem der Ansprüche 1-5,
dadurch gekennzeichnet, daß im Schritt a) der Abfall mit einer Korngröße kleiner als 60-80 mm, vorzugsweise 45 mm, angeliefert bzw. auf eine solche Korngröße zerkleinert wird.

7. Verfahren nach Anspruch 6,
dadurch gekennzeichnet, daß die Zerkleinerung nach Schritt a) durch einen Prallbrecher (3) mit einer Spaltbreite von kleiner als 60-80 mm, vorzugsweise 45 mm, durchgeführt wird.

8. Verfahren nach einem der Ansprüche 1-7,
dadurch gekennzeichnet, daß im Schritt b) Kleinfraktionen (16a) mit einer Korngröße 0-10 mm abgetrennt werden.

9. Verfahren nach Anspruch 3,
dadurch gekennzeichnet, daß die dem zweiten Vibrationstrennrohr (6) zugeführte Kleinfraktion (16a) in Feinkorn (6f) mit einer Korngröße von etwa 0-3 mm und Grobkorn (6g) mit einer Korngröße von etwa 3-10 mm getrennt wird.

10. Verfahren nach Anspruch 9,
dadurch gekennzeichnet, daß das Abtrennen des Feinkorns (6f) durch ein elastisches Sieb unterstützt wird.

11. Trennkaskade zum Trennen von Abfall wie Baumischabfall o.dgl. maximaler Korngröße, von dem vorher Kleinfraktionen (16a) unterhalb einer bestimmten Korngröße abgetrennt werden, in Leichtfraktionen und weiterbewertbare, schwere Inertfraktionen (18), insbesondere nach Schritt d) des Verfahrens nach Anspruch 1,
gekennzeichnet durch mehrere abgerundete, trogartig geformte oben offene Behälter (7a, 7b, 7c), deren einer Rand (17a) höher als deren anderer Rand (17b) ist und die übereinander, in der waagerechten Ebene quer zur Troglängsachse versetzt, angeordnet sind, wobei der höhere Rand (17a) des höher angeordneten Behälters (7a) etwa über der Mitte des darunterliegenden Behälters (7b) angeordnet ist, und die miteinander zu einer Einheit verbunden, federnd aufgehängt und durch mindestens einen rotierenden Unwuchtmotor (9) angetrieben sind, so daß die schwere Inertfraktion über einen höheren Rand (17a) fällt und die jeweilige Leichtfraktion über den anderen Rand (17b) ausgeschieden wird.

12. Trennkaskade nach Anspruch 11,
dadurch gekennzeichnet, daß drei trogartige Behälter (7a, 7b, 7c) übereinander angeordnet sind.

13. Trennkaskade nach Anspruch 11 oder 12,
dadurch gekennzeichnet, daß die Rotationsachse (9b) des Unwuchtmotors (9) quer zur Längsachse der trogartigen Behälter (7a, 7b, 7c) verläuft und gegenüber der Waagerechten (31) der Behälter (7a, 7b, 7c) um einen spitzen Winkel (28) geneigt ist.

14. Trennkaskade nach Anspruch 13,
dadurch gekennzeichnet, daß der Winkel 20°-40°, vorzugsweise 30°, beträgt.

15. Trennkaskade nach einem der Ansprüche 11-14,
dadurch gekennzeichnet, daß der Unwuchtmotor (9) im dynamischen Schwerpunkt der Trennkaskade (7) angeordnet ist.

16. Trennkaskade nach einem der Ansprüche 11-15,
dadurch gekennzeichnet, daß die trogförmigen Behälter (7a, 7b, 7c) zwischen zwei senkrecht stehenden Seitenwänden (25) angeordnet sind, die durch waagerechte, stabile Verbindungstraversen (26a, 26b, 26c) zu einem steifen Ganzen miteinander verbunden sind, und daß das Ganze über Federn (12) schwingend auf einem Gestell (24) aufgehängt ist.

17. Trennkaskade nach Anspruch 16,
dadurch gekennzeichnet, daß auf den Außenflächen beider Seitenwände (25) je ein Unwuchtmotor (9) befestigt ist, deren Drehrichtungen (9a) entgegengesetzt zueinander sind.

18. Trennkaskade nach einem der Ansprüche 11-17,
gekennzeichnet durch eine sich über im wesentlichen die gesamte Trogbreite erstreckende, etwa waagerecht den jeweils höheren Rand (17a) anblasende Zuluftdüse (10) und eine sich über im wesentlichen die gesamte Trogbreite erstreckende, etwa waagerecht vom jeweils niedrigeren Rand (17b) absaugende Abluftdüse (11) zur Unterstützung beim Austrag der Leichtfraktion.

19. Vorrichtung zum Trennen von Abfall wie Baumischabfall o.dgl. maximaler Korngröße in Kleinfraktion (16a) und Grobfraktion (16b), nach Schritt b) des Verfahrens nach Anspruch 1,
dadurch gekennzeichnet, daß ein gegenüber der Waagerechten leicht geneigtes Vibrationstrennrohr (5) mit etwa zylindrischem Querschnitt und einer Eingangsöffnung (51) und einer Ausgangsöffnung (52) vorgesehen ist, der die Grobfraktion (16b) entnehmbar ist,
daß das Vibrationstrennrohr (5) durch einen Vibrationsmotor gegenüber der Waagerechten (31) um einen spitzen Winkel (32) aufwärts gerichtet in Querrichtung in Schwingungen versetzt ist, und
daß im Bereich kurz vor der Ausgangsöffnung (52) gegenüber dem untersten Punkt des Bodens (53) des Vibrationstrennrohrs (5) zu derjenigen Seite versetzt eine Entnahmeöffnung (54) für die Kleinfraktion (16a) vorgesehen ist, die gegenüber dem Boden (53) in Aufwärtsrichtung der Schwingung liegt.

20. Vorrichtung nach Anspruch 19,
dadurch gekennzeichnet, daß zusätzlich zu dem ersten Vibrationstrennrohr (5) ein zweites Vibrationstrennrohr (6) etwa gleichen Aufbaus vorgesehen ist, dem die abgetrennte Kleinfraktion (16a) des ersten Vibrationstrennrohrs (5) zugeführt wird, und dieses in Feinkorn (6f) und Grobkorn (6g) trennt, und daß im Bereich der Ausgangsöffnung (62) des zweiten Vibrationstrennrohrs (6) Zuluft (10) eingeführt und Abluft (11) zum Abtransport der im Grobkorn (6g) enthaltenen Schwebeteilchen (6b) angewandt wird.

21. Vorrichtung nach Anspruch 20,
dadurch gekennzeichnet, daß im Endbereich (62) des zweiten Vibrationstrennrohrs (61 am Boden (63) ein elastisches Sieb zur zusätzlichen Unterstützung des Abtrennens des Feinkorns (6f) vorgesehen ist.

22. Vorrichtung nach Anspruch 19,
dadurch gekennzeichnet, daß als Schwerkraftabscheider (8) zur Wiederaufbereitung der Abluft (11) ein oder mehrere Zyklonabscheider vorgesehen sind.

23. Vorrichtung nach Anspruch 19,
dadurch gekennzeichnet, daß im wesentlichen alle Einrichtungen in einem oder mehreren transportfähigen Containern (21, 22) untergebracht sind.

24. Vorrichtung nach den Ansprüchen 22 und 23,
dadurch gekennzeichnet, daß die Vorrichtung auf zwei Container (21, 22) verteilt ist, wobei in einem der Container (22) der Schwerkraftabscheider (8) sowie ggf. dazugehörige Zusatzeinrichtungen wie Gebläse (23) zum Erzeugen der Zuluft und in dem anderen Container (21) die übrigen Einrichtungen (4, 5, 6, 7, 9, 10, 11, 14), jedoch ohne Einrichtung (3) zum Zerkleinern nach Schritt a), untergebracht sind.

## Claims

1. A process for sorting at least partially usable waste such as mixed waste from construction or the like, in which light fractions, such as wood, plastics materials and floating materials such as paper etc., are extracted from a re-usable heavy inert fraction by means of the process steps below:
a) delivering the waste of a particular maximum particle size or comminuting the waste to such a particle size;
b) separating the waste into fine fraction (16a) and coarse fraction (16b) in a vibrating separation tube (5);
c) cleaning the fine fraction (16a) obtained to obtain a heavy reusable inert fraction (6a) using inlet air (10) and outlet air (11) for removing floating particles (6b); and
d) separating the coarse fraction (16b) into light fraction and reusable heavy inert fraction (18) by means of a separation cascade (7).

2. A process according to Claim 1, characterized in that, in the separation cascade (7), inlet air (10) and outlet air (11) aid the separation of the coarse fraction (16b) into light fraction and heavy fraction (18).

3. A process according to Claim 1 or 2, characterized in that the fine fraction (16a) obtained from the first vibrating separation tube (5) is supplied to a second vibrating separation tube (6) in which further separation into fine particles (6f) and coarse particles (6g) takes place, in that the fine particles (6f) are supplied for re-use, whilst the coarse particles (6g) are cleaned by blowing (10) air onto floating particles (6b), and sucking (11) air away from them, in the region of the exit portion (62) of the second vibrating separation tube (6), and are then supplied as cleaned heavy fraction (6a) for re-use.

4. A process according to one of Claims 1-3, characterized in that the outlet air (11) from the separation cascade (7), and/or the outlet air (11) which is drawn off when the coarse particles (6g) obtained are cleaned, is reprocessed by means of a gravity separator (8) and used again as inlet air (10).

5. A process according to one of the preceding claims, characterized in that the comminuted waste is guided over a magnetic separator (13) before step b) is carried out.

6. A process according to one of Claims 1-5, characterized in that in step a) the waste having a particle size smaller than 60-80 mm, preferably 45 mm, is delivered or comminuted to such a particle size.

7. A process according to Claim 6, characterized in that the comminution according to step a) is carried out by an impact crusher (3) having a gap width smaller than 60-80 mm, preferably 45 mm.

8. A process according to one of Claims 1-7, characterized in that in step b) fine fractions (16a) having a particle size of 0-10 mm are separated off.

9. A process according to Claim 3, characterized in that the fine fraction (16a) supplied to the second vibrating separation tube (6) is separated into fine particles (6f) having a particle size of approximately 0-3 mm and coarse particles (6g) having a particle size of approximately 3-10 mm.

10. A process according to Claim 9, characterized in that the fine particles (6f) are separated off with the aid of a resilient sieve.

11. A separation cascade for separating waste, such as mixed waste from construction or the like, which is of a maximum particle size, from which fine fractions (16a) below a particular particle size have previously been separated off, into light fractions and reusable heavy inert fractions (18), in particular according to step d) of the process according to Claim l, characterized by a plurality of rounded containers (7a, 7b, 7c) which have a trough-like shape, are open at the top, have one edge (17a) which is higher than the other edge (17b), and are arranged one above the other and offset transversely with respect to the longitudinal trough-axis in the horizontal plane, the higher edge (17a) of the container (7a) which is arranged higher up being arranged approximately over the centre of the container (7b) located below it, and which are mutually connected to form a unit, are suspended in resilient manner and are driven by at least one rotating unbalance motor (9) so that the heavy inert fraction falls over a higher edge (17a) and the respective light fraction is removed over the other edge (17b).

12. A separation cascade according to Claim 11, characterized in that three trough-like containers (7a, 7b, 7c) are arranged one above the other.

13. A separation cascade according to Claim 11 or 12, characterized in that the rotational axis (9b) of the unbalance motor (9) runs transversely with respect to the longitudinal axis of the trough-like containers (7a, 7b, 7c) and is inclined at an acute angle (28) with respect to the horizontal (31) through the containers (7a, 7b, 7c).

14. A separation cascade according to Claim 13, characterized in that the angle is 20°-40°, preferably 30°.

15. A separation cascade according to one of Claims 11-14, characterized in that the unbalance motor (9) is arranged in the dynamic centre of gravity of the separation cascade (7).

16. A separation cascade according to one of Claims 11-15, characterized in that the trough-shaped containers (7a, 7b, 7c) are arranged between two perpendicular side walls (25) which are mutually connected by horizontal, stable connecting cross-pieces (26a, 26b, 26c) to form a rigid whole, and in that the whole is suspended in oscillating manner on a frame (24) by way of springs (12).

17. A separation cascade according to Claim 16, characterized in that a respective unbalance motor (9), the rotational directions (9a) of which are mutually opposed, is mounted on the outer face of each of the two side walls (25).

18. A separation cascade according to one of Claims 11-17, characterized by an inlet-air nozzle (10) extending over substantially the entire trough width and blowing air approximately horizontally onto the in each case higher edge (17a), and an outlet-air nozzle (11) extending over substantially the entire trough width and sucking air approximately horizontally away from the in each case lower edge (17b) to aid discharge of the light fraction.

19. A device for separating waste, such as mixed waste from construction or the like, which is of a maximum particle size, into fine fraction (16a) and coarse fraction (16b) according to step b) of the process according to Claim 1, characterized in that a vibrating separation tube (5), which is slightly inclined with respect to the horizontal, is provided with an approximately cylindrical cross-section and an entry opening (51) and an exit opening (52) which enables the coarse fraction (16b) to be discharged, in that the vibrating separation tube (5) is made to oscillate in a manner directed upwards by an acute angle (32) with respect to the horizontal (31), by means of a vibrating motor, and in that a discharge opening (54) for the fine fraction (16a) is provided in the region a short distance before the exit opening (52) opposite the lowest point of the bottom (53) of the vibrating separation tube (5) and offset with respect to that side opposite the bottom (53) in the upward oscillation direction.

20. A device according to Claim 19, characterized in that, in addition to the first vibrating separation tube (5), there is provided a second vibrating separation tube (6) of approximately the same construction to which the separated-off fine fraction (16a) of the first vibrating separation tube (5) is supplied and which separates this fine fraction into fine particles (6f) and coarse particles (6g), and in that, in the region of the exit opening (62) of the second vibrating separation tube (6), inlet air (10) is guided in and outlet air (11) is used to transport away the floating particles (6b) contained in the coarse particles (6g).

21. A device according to Claim 20, characterized in that a resilient sieve for additionally aiding the separating-off of the fine particles (6f) is provided in the end region (62) of the second vibrating separation tube (6), at the bottom (63).

22. A device according to Claim 19, characterized in that one or more cyclone separators are provided as the gravity separator (8) for reprocessing the outlet air (11).

23. A device according to Claim 19, characterized in that substantially all the devices are accommodated in one or more transportable containers (21, 22).

24. A device according to Claims 22 and 23, characterized in that the device is distributed over two containers (21, 22), the gravity separator (8) and, where applicable, associated additional devices such as fans (23) for generating the inlet air being accommodated in one of the containers (22) and the remaining devices (4, 5, 6, 7, 9, 10, 11, 14) being accommodated in the other container (21), although without the device (3) for comminution according to step a).

## Revendications

1. Procédé pour trier des déchets recyclables au moins en partie tels que des déchets mélangés provenant de la construction ou similaires dans lequel à partir d'une fraction inerte lourde recyclable, des fractions légères telles que du bois, des plastiques ainsi que des matières en suspension comme du papier etc. sont triées, comportant les étapes suivantes :
a) apport de déchets d'une granulométrie maximale déterminée ou broyage des déchets à une telle granulométrie,
b) séparation des déchets en fraction à petits grains (16a) et fraction à gros grains (16b) dans un tube séparateur à vibrations (5),
c) nettoyage de la fraction à petits grains (16a) reçue dans le but d'obtenir une fraction inerte (6a) lourde et recyclable en utilisant l'air d'arrivée (10) et l'air de sortie (11) pour le dépôt des particules en suspension (6b) et
d) séparation de la fraction à gros grains (16b) par une cascade de séparation (7) en fraction légère et fraction inerte (18) lourde et recyclable.

2. Procédé selon la revendication 1, caractérisé en ce que la séparation de la fraction à gros grains (16b) dans la cascade de séparation (7) en fraction légère et fraction lourde (18) est soutenue par l'air d'arrivée (10) et l'air de sortie (11).

3. Procédé selon la revendication 1 ou 2, caractérisé en ce que la fraction à petits grains (16a) obtenue à partir du premier tube séparateur à vibrations (5) est amenée à un second tube séparateur à vibrations (6) dans lequel a lieu une autre séparation en grains fins (6f) et grains grossiers (6g) de telle sorte que les grains fins (6f) sont amenés à un recyclage tandis que les grains grossiers (6g) sont nettoyés par injection d'air (10) et aspiration d'air (11) dans la zone de la section de sortie (62) du second tube séparateur à vibrations (6) et sont ensuite amenés au recyclage en tant que fraction lourde (6a) nettoyée.

4. Procédé selon l'une quelconque des revendications 1 à 3, caractérisé en ce que l'air de sortie (11) provenant de la cascade de séparation (7) et/ou l'air de sortie (11) évacué lors du nettoyage des grains grossiers (6g) reçus est retraité par un séparateur gravimétrique (8) et réutilisé comme air d'arrivée (10).

5. Procédé selon l'une quelconque des revendications précédentes, caractérisé en ce que les déchets broyés sont guidés par l'intermédiaire d'un séparateur magnétique (13) avant l'exécution de l'étape b).

6. Procédé selon l'une quelconque des revendications 1 à 5, caractérisé en ce que dans l'étape a), les déchets apportés présentent une granulométrie inférieure à l'intervalle de 60 à 80 mm, de préférence de 45 mm respectivement sont broyés à une telle granulométrie.

7. Procédé selon la revendication 6, caractérisé en ce que le broyage selon l'étape a) est effectué par un concasseur à impact (3) présentant une largeur de fission inférieure à l'intervalle de 60 à 80 mm, de préférence de 45 mm.

8. Procédé selon l'une quelconque des revendications 1 à 7, caractérisé en ce que dans l'étape b), les fractions à petits grains (16a) présentant une granulométrie de 0 à 10 mm sont séparées.

9. Procédé selon la revendication 3, caractérisé en ce que la fraction à petits grains (16a) amenée dans le second tube séparateur à vibrations (6) est séparée en grains fins (6f) avec une granulométrie de 0 à 3 mm environ et en grains grossiers (6g) avec une granulométrie de 3 à 10 mm environ.

10. Procédé selon la revendication 9, caractérisé en ce que la séparation des grains fins (6f) est réalisée au moyen d'un tarnis élastique.

11. Cascade de séparation de déchets tels que des déchets mélangés provenant de la construction ou similaires, d'une granulométrie maximale et à partir desquels des fractions à petits grains (16a) inférieurs à une granulométrie déterminée sont séparées au préalable en fractions légères et en fractions inertes (18) lourdes et recyclables, en particulier selon l'étape d) du procédé selon la revendication 1, caractérisée par plusieurs récipients (7a, 7b, 7c) arrondis, en forme d'auge, ouverts en haut, dont l'un des bords (17a) est plus élevé que l'autre bord (17b) et qui sont disposés les uns au-dessus des autres, décalés dans le plan horizontal transversalement à l'axe longitudinal des auges, le bord le plus élevé (17a) du récipient (7a) disposé le plus haut étant disposé à peu près au-dessus du milieu du récipient (7b) se trouvant au-dessous et qui sont assemblés l'un avec l'autre en formant une unité, sont suspendus par ressort et entraînés par au moins un moteur déséquilibré (9) rotatif de telle sorte que la fraction inerte lourde tombe sur un bord plus élevé (17a) et que la fraction légère respective est déposée sur l'autre bord (17b).

12. Cascade de séparation selon la revendication 11, caractérisée en ce que trois récipients (7a, 7b, 7c) en forme d'auge sont disposés les uns au-dessus des autres.

13. Cascade de séparation selon la revendication 11 ou 12, caractérisée en ce que l'axe de rotation (9b) du moteur déséquilibré (9) passe transversalement à l'axe longitudinal des récipients (7a, 7b, 7c) en forme d'auge et est incliné en formant un angle aigu (29) par rapport à l'horizontale (31) des récipients (7a, 7b, 7c).

14. Cascade de séparation selon la revendication 13, caractérisée en ce que l'angle est de 20 à 40°, de préférence de 30°.

15. Cascade de séparation selon l'une quelconque des revendications 11 à 14, caractérisée en ce que le moteur déséquilibré (9) est disposé dans le centre de gravité dynamique de la cascade de séparation (7).

16. Cascade de séparation selon l'une quelconque des revendications 11 à 15, caractérisée en ce que les récipients (7a, 7b, 7c) en forme d'auge sont disposés entre deux parois latérales (25) verticales qui sont assemblées l'une avec l'autre par des traverses d'assemblage (26a, 26b, 26c) stables pour former une unité rigide et en ce que l'unité est suspendue par ressort (12) en oscillant sur un châssis (24).

17. Cascade de séparation selon la revendication 16, caractérisée en ce que sur les faces extérieures des deux parois latérales (25) est respectivement fixé un moteur déséquilibré (9) dont les sens de rotation (9a) sont opposés l'un à l'autre.

18. Cascade de séparation selon l'une quelconque des revendications 11 à 17, caractérisée par une buse pour l'air d'arrivée (10) s'étendant en substance au-dessus de toute la largeur de l'auge et soufflant à peu près horizontalement sur le bord (17a) respectivement le plus élevé et une buse pour l'air de sortie (11) s'étendant en substance sur toute la largeur de l'auge et aspirant à peu près horizontalement à partir du bord (17b) respectivement le plus bas, dans un but de soutien lors de l'évacuation de la fraction légère.

19. Dispositif de séparation de déchets tels que des déchets mélangés provenant de la construction ou similaires d'une granulométrie maximale, en fraction à petits grains (16a) et fraction à gros grains (16b), selon l'étape b) du procédé selon la revendication 1, caractérisé en ce qu'il est prévu un tube séparateur à vibrations (5) légèrement incliné par rapport à l'horizontale et comportant une section transversale à peu près cylindrique, une ouverture d'entrée (51) et une ouverture de sortie (52) à partir de laquelle on peut prélever la fraction à gros grains (16b), en ce que le tube séparateur à vibrations (5) subit des vibrations dans le sens transversal sous l'effet d'un moteur à vibrations et est orienté vers le haut en formant un angle aigu (32) par rapport à l'horizontale (31) et en ce que dans la zone située juste avant l'ouverture de sortie (52), il est prévu pour la fraction à petits grains (16a), une ouverture de prélèvement (54) décalée par rapport au point le plus bas du fond (53) du tube séparateur à vibrations (5) du côté qui se trouve face au fond (53) dans le sens ascendant de la vibration.

20. Dispositif selon la revendication 19, caractérisé en ce que, en plus du premier tube séparateur à vibrations (5), il est prévu un second tube séparateur à vibrations (6) d'une structure à peu près identique auquel est amenée la fraction à petits grains (16a) séparée et provenant du premier tube séparateur à vibrations (5) et qui sépare celle-ci en grains fins (6f) et grains grossiers (6g), en ce que dans la zone de l'ouverture de sortie (62) du second tube séparateur à vibrations (6), l'air d'arrivée est introduit et l'air de sortie (11) est utilisé pour l'évacuation des particules en suspension (6b) contenues dans les grains grossiers (6g).

21. Dispositif selon la revendication 20, caractérisé en ce que dans la zone terminale (62) du second tube séparateur à vibrations (6), il est prévu sur le fond, un tamis élastique à titre de moyen supplémentaire pour la séparation des grains fins (6f).

22. Dispositif selon la revendication 19, caractérisé en ce que, un ou plusieurs séparateurs à cyclone sont prévus comme séparateurs gravimétriques (8) pour le retraitement de l'air de sortie (11).

23. Dispositif selon la revendication 19, caractérisé en ce que tous les dispositifs sont logés en substance dans un ou plusieurs conteneurs (21, 22) transportables.

24. Dispositif selon les revendications 22 et 23, caractérisé en ce que le dispositif est réparti en deux conteneurs (21, 22), le séparateur gravimétrique (8) et le cas échéant, des dispositifs afférents tels qu'une souffleuse (23) permettant de produire l'air d'arrivée étant logés dans l'un des conteneurs (22) et les autres dispositifs (4, 5, 6, 7, 9, 10, 11, 14) étant logés dans l'autre conteneur (21), cependant sans le dispositif (3) destiné au broyage selon l'étape a).
